(19) Europäisches Patentamt
European Patent Office
Office européen des brevets

(11) **EP 2 345 041 B1**

(12) **FASCICULE DE BREVET EUROPEEN**

(45) Date de publication et mention
de la délivrance du brevet:
**18.06.2014 Bulletin 2014/25**

(21) Numéro de dépôt: **09744702.3**

(22) Date de dépôt: **06.11.2009**

(51) Int Cl.:
***G21C 19/36*** ^(2006.01)

(86) Numéro de dépôt international:
**PCT/EP2009/064736**

(87) Numéro de publication internationale:
**WO 2010/052298 (14.05.2010 Gazette 2010/19)**

(54) **Procédé de vidage de gaines de combustible nucléaire et machine de broyage par déformation de la gaine**

Verfahren zum Entleeren von Kernbrennstoffmänteln und Manteldeformations-Zerkleinerungsmaschine

Method for emptying nuclear fuel sheaths and sheath-deformation crushing machine

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **06.11.2008 FR 0857550**

(43) Date de publication de la demande:
**20.07.2011 Bulletin 2011/29**

(73) Titulaire: **Areva NC**
**75009 Paris (FR)**

(72) Inventeur: **DANTEN, Hubert**
**F-50440 Beaumont-hague (FR)**

(74) Mandataire: **Ilgart, Jean-Christophe et al**
**BREVALEX**
**95, rue d'Amsterdam**
**75378 Paris Cedex 8 (FR)**

(56) Documents cités:
**EP-A- 0 169 629      FR-A- 1 452 479**
**GB-A- 2 067 342      JP-A- 63 182 599**

**Description**

Le sujet de cette invention est un procédé de vidage de gaines contenant du combustible nucléaire ainsi qu'une machine de broyage de ce combustible, à un état compact, en appliquant une déformation aux gaines.

Des traitements ou des recyclages de combustibles nucléaires impliquent généralement un cisaillage des gaines pour permettre la dissolution dans de l'acide nitrique du combustible libéré lors du cisaillage et du combustible resté logé dans les morceaux de gaines cisaillées autrement dénommés « coques ».

Dans le cadre de gaines de combustibles MOX, RNR, ou LWR non irradiés, il est souhaitable de séparer au préalable les gaines de leur combustible en les vidant car le combustible ne peut se dissoudre facilement avec la coque, et en outre, un broyage du combustible présent sous forme de pastilles est nécessaire avant le traitement de dissolution pour améliorer cette dernière par augmentation de la surface d'attaque.

Un procédé classique de vidage des gaines de combustible consiste à ouvrir les gaines par un outil puis à les incliner pour que le combustible s'en échappe. Des difficultés apparaissent toutefois dans de nombreux cas, notamment quand les pastilles de combustible ont un jeu faible avec la gaine (inférieur à 0,2mm environ), qu'elles ont gonflé entre l'engainage et le dégainage, ou qu'elles se sont écaillées avec formation d'éclats provoquant des coincements entre les pastilles et la gaine. L'inclinaison des gaines ouvertes ne permet alors pas de les vider.

D'autres procédés de vidage ont été brevetés. On peut citer les documents HU-A-48046 (disponible par l'abrégé XP 002 469 759), EP-A-0 169 129, ou encore FR-A-1 452 479. Plusieurs appliquent à la gaine une déformation plastique par des galets qui créent une pression de contact dont l'effet est d'écraser la matière de la gaine pour diminuer son épaisseur et corrélativement augmenter son diamètre. Selon ces brevets, le jeu avec le combustible demeurant compact est accru, ce qui facilite le vidage. Ces procédés sont cependant tributaires d'une part de la présence de pastilles jointives et à l'état compact dans la gaine, et d'autre part du maintien des pastilles à l'état compact (en pastilles intactes) sous l'effet de la pression de laminage nécessaire pour réduire l'épaisseur des gaines. Ces procédés peuvent donc rester insuffisants en présence de pastilles fragiles, non homogènes en diamètre et/ou écaillées dans la gaine, en entraînant alors des altérations ou interruptions de réduction d'épaisseur de la gaine à ces endroits, donc de l'augmentation escomptée du diamètre des gaines, des irrégularités de forme de la gaine, et ainsi de nouveaux obstacles au combustible par coincement.

Une autre condition importante pour la bonne exécution de ces procédés est que l'ouverture de la gaine, nécessaire au vidage, doit être pratiquée au ras de la première pastille de combustible, pour éviter que la pression des galets ne produise un rétreint à l'endroit de cette ouverture, s'opposant à la sortie des pastilles. Ce rétreint est constaté même si la distance entre l'ouverture et l'extrémité du combustible est aussi faible que 0,5 ou 1 mm. Pourtant l'ouverture est normalement pratiquée à distance du combustible, qui pourrait endommager l'outil de coupe s'il entrait en contact avec lui et dont la position de l'extrémité est de toute façon difficile à connaître : le rétreint apparaît donc, et la sortie du combustible peut être compromise.

Le document JP-A-63 182 559 décrit le passage d'une gaine de combustible entre des paires de galets assez rapprochées pour produire des ovalisations de la gaine assez importantes pour broyer le combustible, c'est-à-dire le faire passer d'un état compact, où il est divisé seulement en pastilles de forme régulière, à un état fragmenté où les pastilles ont été brisées en éclats plus petits ou pulvérisés. Un inconvénient de ce procédé est que l'ovalisation produite par la dernière paire de galets est définitive et peut donc nuire ici aussi au vidage si le broyage a été incomplet.

La présente invention vise à perfectionner les procédés de vidage d'une gaine de combustible nucléaire impliquant une déformation de la gaine, à un degré suffisant pour produire un broyage d'un combustible présent d'abord à l'état compact. Sa caractéristique est que la déformation des sections de la gaine n'est pas définitive mais qu'elle est au contraire réduite dans une étape finale de façon à restaurer la rotondité d'origine de la gaine, au moins dans une large mesure (variations sur le diamètre d'une gaine après le traitement inférieures à 0,05 mm). Cette double originalité concourt à assurer un vidage bien meilleur qu'avec les procédés connus auparavant.

Un aspect de l'invention est ainsi un procédé de vidage de gaines de combustible nucléaire, le combustible étant à un état compact, comprenant une étape consistant à introduire la gaine dans une machine appliquant une déformation de la gaine par une ovalisation répétée pendant une pluralité de cycles impliquant des déformations plastiques de la gaine, caractérisé en ce que l'ovalisation dans les cycles est croissante (progressive) d'un cycle à l'autre puis décroissante (dégressive), de manière à broyer le combustible puis à ramener les gaines à la forme circulaire d'origine.

Les ovalisations sont des déformations des sections de la gaine, rondes à l'origine, à une forme ovale en les aplatissant. Les cycles d'ovalisation correspondent à des demi-tours de la gaine (qui est constamment mise en rotation), de sorte que chaque point d'une section de la paire déformée par les galets est porté à un rayon maximal et à un rayon minimal de la forme ovale définie créée par les galets pendant un cycle. Une ovalisation forte correspond à un aplatissement plus grand d'une section de la gaine. Une ovalisation progressive correspond à un aplatissement de plus en plus grand d'une même section de la gaine d'un cycle à l'autre à mesure qu'elle progresse entre les galets, et réciproquement une ovalisation dégressive correspond à un aplatissement de plus en plus faible d'un cycle à l'autre. Une ovalisation maximale à l'intérieur d'un cycle peut être définie comme le passage d'un point de la gaine par le plus grand rayon ou le plus petit rayon de la forme ovale. Les ovalisations peuvent être mesurées par tout critère exprimant la différence ou le rapport entre le plus grand rayon et le plus petit rayon de la forme ovale, ou entre un de ces rayons et le rayon d'origine de la forme ronde avant la déformation.

L'ovalisation est de préférence appliquée de façon assez forte pour broyer le combustible pendant au moins 40 cycles de façon à garantir une grande finesse du broyage.

Elle peut être appliquée à un degré permettant de réduire de 3% au moins un diamètre du combustible quand celui-ci est encore à l'état de pastilles compactes.

L'invention concerne aussi une machine d'application d'une déformation à des gaines de combustible nucléaire qui soit apte à accomplir ce procédé. Elle comprend une paire de galets en vis-à-vis entre lesquelles les gaines passent, et un moteur de mise en rotation des galets ; elle est caractérisée en ce que les galets comprennent une tranche périphérique à une portion d'attaque conique et une portion de sortie conique, ces deux portions s'épanouissant toutes deux vers une portion centrale du galet, et en ce que les galets ont des axes de rotation essentiellement parallèles à une direction des gaines à travers la machine de sorte que toutes lesdites portions de la tranche des galets contribuent à déformer les gaines. Cette constitution des galets permet d'appliquer progressivement à la gaine des déformations suffisantes pour broyer lé combustible, puis de réduire peu à peu les déformations pour ramener la gaine à la forme circulaire d'origine.

La forme caractéristique du galet de l'invention est épaisse au centre et effilée aux extrémités, et donc convexe, à distinguer de la forme concave des galets du document JP-A-63 182 559, qui sont aussi des axes essentiellement perpendiculaires à la direction de la gaine, contrairement aux galets de l'invention.

La portion d'attaque et la portion de sortie sont suffisamment larges et épaisses pour imposer deux séries d'ovalisations à la gaine et doivent être distinguées des faces extrêmes des galets, qui sont seulement des limites et n'exercent aucune pression.

La portion centrale est avantageusement cylindrique pour appliquer la déformation la plus grande pendant un nombre de cycles d'ovalisation suffisant. Elle est donc souvent une portion assez large.

Selon un autre perfectionnement, les galets aux axes de rotation essentiellement parallèles à une direction de cheminement des gaines à travers la machine sont toutefois inclinés dans des sens opposés par rapport à ladite direction, l'inclinaison pouvant être de 2° ou moins par rapport à cette direction. La déformation des galets s'accompagne alors non seulement d'une rotation de la gaine, mais d'une avance de celle-ci à une vitesse suffisamment lente pour permettre le nombre d'ovalisations souhaité avant que chaque section de la gaine n'ait traversé l'entre-deux des galets.

Il est avantageux que la machine comprenne un guide de la gaine qui soit incliné sur la direction horizontale (à l'état de montage de la machine), ce qui permet de vider la gaine à mesure que le combustible est broyé. Un vidage efficace est mieux garanti même avec de grandes longueurs de gaines.

L'invention sera maintenant décrite en liaison aux figures, parmi lesquelles :

- la figure 1 est une vue en perspective de la machine,
- la figure 2 est une vue de côté de la machine,
- la figure 3 est une vue de dessus de la machine,
- la figure 4 illustre une ovalisation,
- et la figure 5 illustre l'ensemble des cycles d'ovalisation.

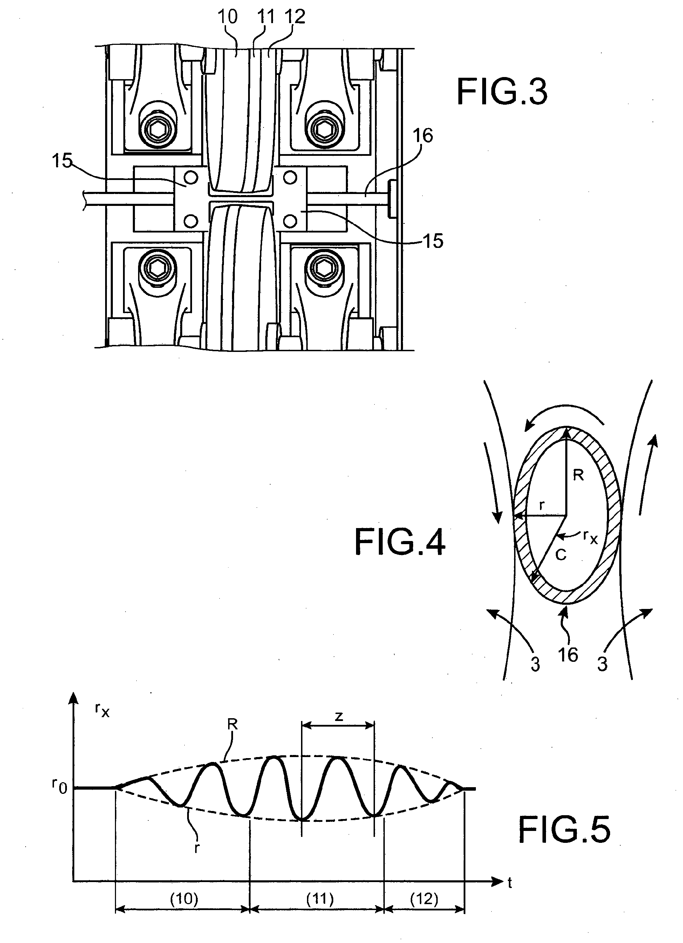

La machine comprend un châssis sur lequel sont montés un moto-réducteur 2 et une paire de galets 3 placés en vis-à-vis. Les galets sont disposés sur les arbres 4 tournant dans des paires de paliers 5 et munis d'un pignon 6 à une extrémité. Le moto-réducteur 2 comprend aussi un pignon 7 de sortie du mouvement. Une chaîne 8 est tendue entre les pignons 6 et 7 pour imposer un mouvement de rotation égal et dans le même sens aux arbres 4 et aux galets 3. Les galets 3 comprennent sur leur tranche 9 une portion d'attaque 10 conique (que les gaines 16 atteignent en premier), une portion centrale 11 cylindrique et une portion de sortie 12 conique (par laquelle les gaines quittent les galets 3) qui se raccordent entre elles sans variation de diamètre, les portions coniques 10 et 12 s'épanouissant vers la portion centrale 11 qui constitue donc la partie la plus large du galet 3 (leurs conicités sont exagérées dans la représentation de la figure 3). Les paires de paliers 5 sont montées sur des chariots 13 reliés au châssis par des vis de réglage 14 respectives qui sont alignées de sorte que leur rotation permet de faire varier la distance entre les chariots 13 et l'écartement entre les galets 3. Enfin, le dispositif comprend encore un guide-gaine 15 monté sur le châssis 1 entre les chariots 13 pour la réception d'une gaine 16 contenant du combustible nucléaire qui, pour appliquer le procédé de vidage, a été ouverte précédemment par un procédé quelconque par lequel une extrémité de la gaine 16 a été coupée ; une ouverture 17 du guide-gaine 15 permet l'introduction de la gaine 16 dans la machine.

Il est à noter que certains procédés pour couper la guide 16 peuvent entraîner un rétreint à l'ouverture, susceptible de gêner le vidage, mais qu'il est possible d'enlever par un fraisage de l'extrémité de la gaine 16.

La machine fonctionne comme suit. Le moto-réducteur 2 est mis en marche et la gaine 16 est introduite dans le guide-gaine 15 par l'ouverture 17. Elle est happée par les galets 3, dont l'écartement a été choisi en fonction du diamètre de la gaine 16 pour la déformer progressivement par la portion d'attaque 10, maintenir la déformation par la portion centrale 11 et la relâcher avec restauration de la rotondité par la portion de sortie 12. Une ovalisation cyclique de la gaine 16 se produit, qui est d'abord croissante, puis stable et puis décroissante à mesure que la gaine 16 passe par la portion d'attaque 10, la portion centrale 11 puis la portion de sortie 12, et broie le combustible compact sans nuire à la restauration de la rotondité de la gaine 16 en sortie de machine.

Quelques explications seront données à propos des figures 4 et 5. Chaque section de la gaine 16 prend une forme ovale, à peu près elliptique, quand elle passe entre les galets 3 qui la déforment. Le rayon maximal de la forme ovale est R, et le rayon minimal est r, qui dépend de la distance entre les galets 3 à la section considérée de la gaine 16. Un point C quelconque de la gaine est à un rayon $r_x$. La figure 5 illustre l'évolution du rayon $r_x$ du point C avec le temps, à mesure que la gaine 16 avance entre les galets 3 tout en tournant : à partir d'une partie plate correspondant au rayon $r_o$ de la gaine 16 à l'état non déformé (forme ronde), la courbe passe par des ondulations de plus en plus fortes à une première étape (correspondant au passage de la section de la gaine 16 à laquelle appartient le point C considéré) par la portion d'attaque 10, puis par des ondulations égales quand la section passe par la portion centrale 11, puis par des oscillations de plus en plus faibles quand elle passe par la portion de sortie 12, et le rayon du point C a repris une valeur stable proche de $r_o$ quand sa section a quitté les galets 3 : une forme à peu près ronde a été rétablie. L'enveloppe supérieure de la courbe passe par les plus grands rayons R, l'enveloppe inférieure par les plus petits rayons r. Un cycle d'ovalisation Z correspond à un demi-tour de la gaine 16 et au passage du point C par un grand rayon R et un petit rayon r, ou à une ondulation complète de la courbe de la figure 5. Cette courbe est observée successivement par tous les points de toutes les sections de la gaine 16. L'ovalisation atteinte à un cycle Z peut être définie, par exemple, comme la réduction du rayon d'origine $r_o$ de la forme ronde à l'endroit où la forme ovale a le plus petit rayon, soit $\left( \dfrac{r_o - r}{r_o} \right)$,

de façon qu'une ovalisation nulle corresponde à la forme ronde et une grande ovalisation à une forme très aplatie.

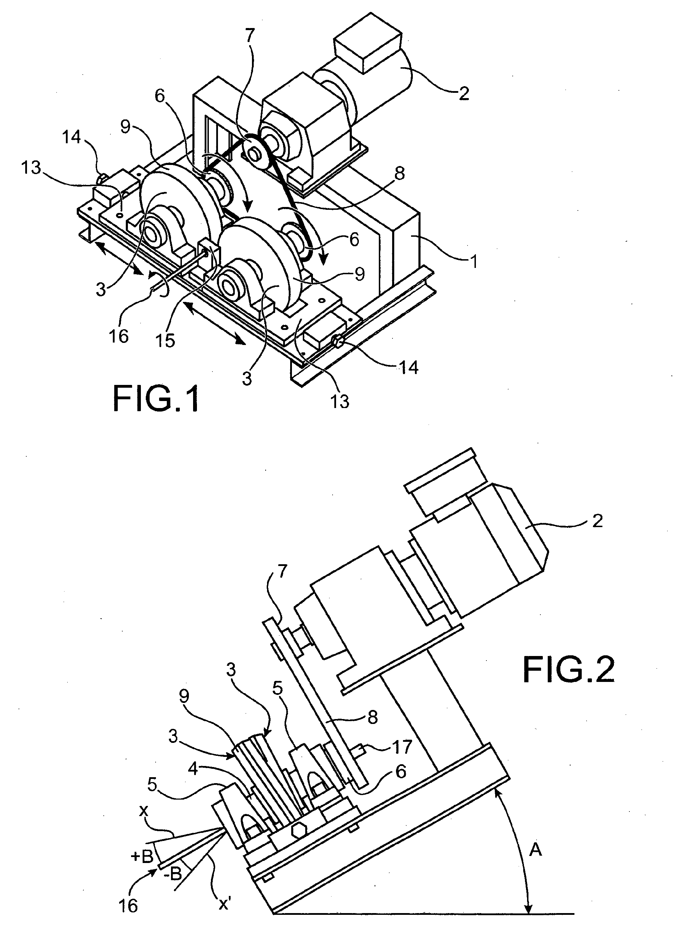

Les galets 3 ont des axes essentiellement parallèles à la direction de la gaine 16 ; mais ils sont toutefois inclinés dans des sens opposés par rapport à la direction de la gaine 16 quand elle est prise dans la piste de cheminement définie par l'alignement du guide-gaine 15, l'un vers l'avant de la gaine 16 et l'autre vers l'arrière, afin que les galets 3 exercent un mouvement de translation de la gaine dirigé vers l'avant et fassent ainsi avancer la gaine 16 entre les galets 3. Ces inclinaisons sont visibles à la figure 3. On peut dire de façon équivalente que (cf. figure 2) les axes X et X' respectifs des galets 3 font des angles opposés +B et -B par rapport à un plan passant par les centres des galets 3 et parallèle à la gaine 16.

Si le châssis est incliné par rapport à l'horizontale ou plus généralement si la gaine 16 traverse la machine en étant inclinée de façon que l'ouverture 17 d'introduction des gaines dirige la gaine vers le bas, le combustible broyé s'échappe immédiatement de la gaine 16 pour tomber au-dessous, dans une trémie non représentée.

Voici maintenant quelques renseignements plus concrets de description de l'invention dans des conditions usuelles. La gaine 16 peut être mise en rotation à environ 300 tours à la minute. L'ovalisation par la portion centrale 11 des galets peut produire un broyage efficace avec une restauration finale de la forme ronde de la gaine 16 quand elle produit une réduction de 5% à 15% du diamètre extérieur de la gaine 16 de sorte que le diamètre intérieur de la gaine 16, à l'endroit le plus réduit par cette valeur d'ovalisation, soit inférieur au diamètre du combustible de 0,3 à 0,6mm environ. L'inclinaison $\pm \mathbf{B}$ des axes de rotation des galets 3 peut être de 1 à 2° environ. Ce petit angle permet, avec une largeur raisonnable de la portion centrale 11, de créer l'ovalisation maximale de chaque section pendant 20 tours, c'est-à-dire 40 ovalisations au total en tout point angulaire C de la gaine et de son contenu. Ce nombre doit donner un broyage général et assez fin du combustible. L'inclinaison du guide-gaine 15 peut être comprise entre 15° et 90° sur l'horizontale (angle A de la figure 2). La portion centrale 11 peut avoir une largeur de 10mm environ. La portion d'attaque 10 a l'effet de déformer peu à peu la gaine 16 sans à-coup excessif, et la portion de sortie 12 a la propriété d'appliquer à la gaine 16 des déformations plastiques de moins en moins importantes qui la ramènent progressivement à sa forme ronde d'origine.

Avec les paramètres donnés ci-dessus, on a constaté la répartition granulométrique suivante des éclats de pastilles de combustible et de poudre obtenus par la machine pour des gaines emplies de pastilles d'oxyde d'uranium non irradié de 7,2mm de diamètre et de 10,1mm de longueur.

| Famille granulométrique (mm) | Fraction massique (%) | Fraction cumulée (%) |
|---|---|---|
| φ<0,080 | 15, 8% | 15,8% |
| 0,08<φ<0,125 | 3, 8% | 19,6% |
| 0,0125<φ<0,16 | 2,6% | 22,2% |

(suite)

| Famille granulométrique (mm) | Fraction massique (%) | Fraction cumulée (%) |
|---|---|---|
| $0,16<\phi<0,2$ | 1,5% | 23,7% |
| $0,2<\phi<0,315$ | 5,3% | 29,0% |
| $0,315<\phi<0,5$ | 6,3% | 35,3% |
| $0,5<\phi<0,8$ | 6,6% | 41,9% |
| $0,8<\phi<1,25$ | 8,6% | 50,6% |
| $1,25<\phi<1,8$ | 6, 8% | 57,4% |
| $1,8<\phi<2$ | 2,2% | 59,6% |
| $2<\phi<3,15$ | 14, 9% | 74,5% |
| $\phi>3,15$ | 25,4% | 99,9% |

**Revendications**

1. Procédé de vidage de gaines circulaires de combustible nucléaire, le combustible étant à un état compact, comprenant une étape consistant à introduire la gaine dans une machine appliquant une déformation de la gaine par une ovalisation répétée pendant une pluralité de cycles impliquant des déformations plastiques de la gaine, **caractérisé en ce que** l'ovalisation dans les cycles est croissante d'un cycle à l'autre puis décroissante, de manière à broyer le combustible puis à ramener les gaines à la forme circulaire d'origine.

2. Procédé de vidage de gaines de combustible nucléaire selon la revendication 1, **caractérisé en ce que** le combustible est broyé pendant au moins quarante des cycles.

3. Procédé de vidage de gaines de combustible nucléaire selon l'une quelconque des revendications 1 ou 2, **caractérisé en ce que** l'ovalisation est appliquée en réduisant de 3% au moins un diamètre du combustible à l'état compact.

4. Machine d'application d'une déformation à des gaines (16) de combustible, comprenant une paire de galets (3) en vis-à-vis et un moteur (2) de mise en rotation des galets, **caractérisée en ce que** les galets comprennent une tranche périphérique (9) à portion d'attaque (10) conique que les gaines atteignent en premier et une portion de sortie (12) conique par laquelle les gaines quittent les galets, la portion d'attaque (10) et la portion de sortie (12) s'épanouissant toutes deux vers une portion centrale des galets, et **en ce que** les galets ont des axes de rotation essentiellement parallèles à une direction des gaines à travers la machine de sorte que toutes lesdites portions de la tranche des galets contribuent à déformer les gaines.

5. Machine selon la revendication 4, **caractérisée en ce que** la portion centrale est cylindrique.

6. Machine selon l'une quelconque des revendications 4 ou 5, **caractérisée en ce que** les galets ont des axes de rotations inclinés dans des sens opposés par rapport à ladite direction, l'un vers l'avant des gaines et l'autre vers l'arrière des gaines.

7. Machine selon la revendication 6, **caractérisée en ce que** les galets sont inclinés d'au plus 2° par rapport à ladite direction.

8. Machine selon l'une quelconque des revendications 4 à 7, **caractérisée en ce qu'**elle comprend un guide de la gaine, qui est incliné par rapport à une direction horizontale.

**Patentansprüche**

1. Verfahren zur Entleerung von runden Kernbrennstoffmänteln, wobei der Brennstoff in einem kompakten Zustand ist, umfassend einen Schritt, der darin besteht, den Mantel in eine Maschine einzuführen, die eine Verformung des Mantels durch eine wiederholte Ovalisierung während einer Mehrzahl von Zyklen vornimmt, die plastische Verformungen des Mantels beinhaltet, **dadurch gekennzeichnet, dass** die Ovalisierung in den Zyklen von einem Zyklus zum anderen zunehmend und dann abnehmend ist, derart, dass der Brennstoff zerkleinert und dann die Mäntel in die ursprüngliche runde Form zurückgebracht werden.

2. Verfahren zur Entleerung von Kernbrennstoffmänteln nach Anspruch 1, **dadurch gekennzeichnet, dass** der Brennstoff während wenigstens 40 Zyklen zerkleinert wird.

3. Verfahren zur Entleerung von Kernbrennstoffmänteln nach einem der Ansprüche 1 oder 2, **dadurch gekennzeichnet, dass** die Ovalisierung ausgeführt wird durch Verringerung eines Durchmessers des Brennstoffs im kompakten Zustand um wenigstens 3 %.

4. Maschine zur Ausübung einer Verformung bei Brennstoffmänteln (16), umfassend ein Paar von gegenüberliegenden Rollen (3) sowie einen Motor (2), um die Rollen in Drehung zu versetzen, **dadurch gekennzeichnet, dass** die Rollen einen Umfangsstreifen (9) mit konischem Angriffsbereich (10) umfassend, den die Mäntel zuerst erreichen, sowie einen konischen Ausgangsbereich (12), bei dem die Mäntel die Rollen verlassen, wobei der Angriffsbereich (10) und der Ausgangsbereich (12) sich beide zu einem zentralen Bereich der Rollen hin erweitern, und dass die Rollen Drehachsen im Wesentlichen parallel zu einer Richtung der Mäntel durch die Maschine derart aufweisen, dass alle diese Bereiche des Streifens der Rollen zur Verformung der Mäntel beitragen.

5. Maschine nach Anspruch 4, **dadurch gekennzeichnet, dass** der zentrale Bereich zylindrisch ist.

6. Maschine nach einem der Ansprüche 4 oder 5, **dadurch gekennzeichnet, dass** die Rollen Drehachsen aufweisen, die in verschiedenen Richtungen bezüglich der Richtung geneigt sind, die eine hin zur Vorderseite der Mäntel und die andere hin zur Rückseite der Mäntel.

7. Maschine nach Anspruch 6, **dadurch gekennzeichnet, dass** die Rollen um wenigstens 2° bezüglich der Richtung geneigt sind.

8. Maschine nach einem der Ansprüche 4 bis 7, **dadurch gekennzeichnet, dass** sie eine Mantelführung umfasst, die bezüglich einer horizontalen Richtung geneigt ist.

**Claims**

1. Method for removing nuclear fuel from circular claddings, the fuel being in a compact state, comprising a step consisting of inserting the cladding in a machine applying deformation to the cladding by repeated ovalisation over a plurality of cycles entailing plastic deformations of the cladding, **characterized in that** ovalisation during the cycles is progressive from one cycle to the other and then degressive, so as to crush the fuel and then restore the claddings to the original circular shape.

2. The nuclear fuel decladding method according to claim 1, **characterized in that** the fuel is crushed over at least forty of the cycles.

3. The nuclear fuel decladding method according to any one of claims 1 or 2, **characterized in that** ovalisation is applied by reducing by at least 3% the diameter of the fuel when in the compact state.

4. The machine for applying deformation to fuel claddings (16), comprising a pair of oppositefacing rollers (3) and a motor (2) setting the rollers in rotation, **characterized in that** the rollers comprise a peripheral edge (9) with a conical leading portion (10) that the claddings reach first and a conical output portion (12) at which the claddings leave the rollers, the leading portion (10) and the output portion (12) both broadening towards a central portion of the rollers, and **in that** the rollers have axes of rotation that are essentially parallel to a direction of the claddings through the machine, so that all said portions of the edge of the rollers contribute towards deforming the claddings.

5. The machine according to claim 4, **characterized in that** the central portion is cylindrical.

6. The machine according to any one of claims 4 or 5, **characterized in that** the rollers have axes of rotation tilted in directions opposite to said direction, one frontwardly of the claddings and the other rearwardly of the claddings.

7. The machine according to claim 6, **characterized in that** the rollers are tilted at no more than 2° relative to the said direction.

8. The machine according to any one of claims 4 to 7, **characterized in that** it comprises a cladding guide which is tilted relative to a horizontal direction.

FIG.1

FIG.2

FIG.3

FIG.4

FIG.5

**RÉFÉRENCES CITÉES DANS LA DESCRIPTION**

**Documents brevets cités dans la description**

- HU 48046 A
- WO XP002469759 A
- EP 0169129 A
- FR 1452479 A
- JP 63182559 A